# EUROPÄISCHE PATENTANMELDUNG

(11) **EP 0 935 120 A2**
(43) Veröffentlichungstag der Anmeldung: **11.08.1999**
(21) Anmeldenummer: 99890006.2
(22) Anmeldetag: 19.01.1999
(51) Int. Cl.: G01B 21/20

(54) **Verfahren und Vorrichtung zur Bestimmung der Krümmung von Langgut**

(30) Priorität: 19.01.1998 AT 6598
(71) Anmelder: Institut für Verformungskunde und Hüttenmaschinen, 8700 Leoben (AT)
(72) Erfinder: Schwenzfeier, Werner, Dipl.-Ing, 8700 Leoben (AT); Gahleitner,Josef,Dipl.-Ing., 4020 Linz (AT); Wollendorfer, Gerhard, Dipl.-Ing, 8700 Leoben (AT); Naumann,Nils,Dipl.-Ing., 15890 Eisenhüttenstadt (DE)
(74) Vertreter: Wildhack, Helmut, Dr. Dipl.-Ing.

(57) **Zusammenfassung**

Die Erfindung bezieht sich auf ein Verfahren und eine Vorrichtung zur Bestimmung einer Krümmung von Langgut ohne äußere Krafteinwirkung wie Biege- oder Richtwirkung der Auflagekräfte.
Erfindungsgmäß ist vorgesehen, daß von mindestens zwei Teilbereichen des Langgutes deren Lage sowie die auf zumindest eine Abstützung wirkende Auflagekraft gemessen und die Meßwerte einer Recheneinheit zugeführt werden, mittels welcher die Abweichung von der Horizontalen im Zustand der Schwerelosigkeit berechnet wird.

## Beschreibung

Die Erfindung betrifft ein Verfahren zur Bestimmung einer Krümmung von Langgut, insbesondere von gewalzten Trägern, Schienen und dergleichen, bzw. von dessen Abweichung von einer horizontalen Ebene in Längserstreckung ohne äußere Krafteinwirkung wie Biege- und Richtwirkung der Auflagekräfte. Weiters umfaßt die Erfindung eine Vorrichtung zur Bestimmung einer Krümmung von Langgut insbesondere zur Durchführung des vorgenannten Verfahrens.
Langgut wird zumeist durch Walzen von Blöcken oder Knüppeln hergestellt, wobei aus wirtschaftlichen Gründen die Produktlängen in zunehmendem Maße gesteigert und gegebenenfalls die Querschnittsformen bei verbesserter Genauigkeit feinteiliger ausgebildet werden. Aus den gleichen Gründen und einer erhöhten Sicherheit wegen erfolgt oft auch ein Einsatz von höherwertigen Werkstoffen mit hohen mechanischen Kennwerten, insbesondere der Festigkeit und Zähigkeit und eine Anwendung von Wärmebehandlungsverfahren, gegebenenfalls auf bestimmte Querschnittszonen beschränkt, zum weiteren Anheben gewünschter Materialeigenschaften.

Während des Ablaufes der Herstellung, zum Beispiel bei einer Vorbereitung des Langgutes für ein partielles Härten, und insbesondere bei der Fertigstellung des Erzeugnisses werden Richtverfahren angewendet, die auf den Querschnitt des Langgutes dessen Werkstoffeigenschaften und dessen Temperatur abzustimmen sind, um eine axfluchtende Ausrichtung sicherzustellen. Zur Ermittlung der Parameter für ein Richten, beispielsweise beim Biegerichten und zur Qualitätsdokumemation des Erzeugnisses ist die Krümmung von Langgut mit hoher Genauigkeit zu bestimmen und zwar möglichst ohne eine Einwirkung von äußeren Kräften bzw. Momenten.

Eine Bestimmung der tatsächlichen Krümmung, also einer Krümmung im schwerelosen Zustand ist jedoch schwierig durchführbar, weil allein durch das Eigengewicht des Langgutes und damit durch die Abstützungskräfte mechanische Momente gebildet werden, welche eine elastische Biegung bewirken und somit eine Feststellung einer gegebenenfalls vorliegenden Abweichung von der Axfluchtung verhindem. Ist beispielsweise eine Schiene mit einer Länge von 200 m und mehr bogenförmig gekrümmt, so kann bei einer ebenen Abstützung ein Hebelarm von ca. 100 m wirksam sein, sodaß deren Eigengewicht ausreicht, diese axfluchtend zu biegen.

Um eine tatsächliche Krümmung von Langgut festzustellen wurde schon vorgeschlagen dieses einseitig vertikal aufzuhängen, mit der Hälfte des Gewichts bodenseitig abzustützen und zu vermessen. Dieses Bestimmungsverfahren kann zwar verbesserte Meßergebnisse erbringen, ist jedoch aufwendig und sollte zweifach mit unterschiedlicher Hängerichtung und anschließender Mittelwertbildung der Meßdaten erfolgen.

Eine weitere Möglichkeit der Bestimmung der Krümmung in einer Richtung eines langen Gegenstandes besteht darin, daß auf einer ebenen horizontalen Unterlage möglichst reibungsfrei dieser jene Form annehmen kann, bei welcher die Summe der inneren Spannungen in Richtung der Auflageebene gleich null ist. Obwohl die Reibung zwischen den zu vermessenden Gegenständen und der Unterlage durch eine Verwendung eines sogenannten Rollentisches vergleichsweise gering gehalten werden kann, sind als Nachteile eine geringe Genauigkeit der Messung, hohe mechanische bzw. maschinenbauliche Aufwendungen, eine komplizierte Meßtechnik und eine Störung des Materialflusses im Fertigungsablauf gegeben.

Die Erfindung setzt sich nun zum Ziel die Nachteile der bekannten Krümmungsermittlungsmethoden von Stabmaterial zu vermeiden und ein Verfahren anzugeben, mit welchem eine Bestimmung der tatsächlichen Krümmung von Langgut, insbesondere von gewalztem Profilstahl auf einfache Weise möglich ist, ohne daß der Materialfluß im Herstellungsablauf eine wesentliche Störung erfährt. Weiters ist es Aufgabe der Erfindung eine Vorrichtung der eingangs genannten Art zu schaffen, mit welcher das Ausmaß der Abweichung von einer horizontalen Ebene in Längsrichtung des Langgutes ohne Einwirkung der Auflagekräfte bestimmbar ist. Das Ziel wird bei einem gattungsgemäßen Verfahren dadurch erreicht, daß von mindestens zwei Teilbereichen des Langgutes bzw. von Segmenten in dessen Längserstreckung deren Lage sowie die auf zumindest eine der horizontal ausgerichteten Abstützungen wirkende Auflagekraft und/oder bei vertikal positionierbaren Abstützungen die vertikale Lage von zumindest einem der Abstützungspunkte gemessen und die Meßwerte einer programmierbaren Recheneinheit zugeführt werden, mittels welcher Einheit in Abhängigkeit von der Lage des Langgutes auf dem Abstützungsmittel und der jeweiligen Auflagekräfte und/oder Auflageniveaus der Abstützungen die Abweichung von der Horizontalen im Zustand einer Schwerelosigkeit berechnet wird.

Die weitere Aufgabe der Erfindung wird gelöst, indem ein Abstützungsmittel für das Langgut mindestens drei horizontal ausrichtbare und/oder in ihrer vertikalen Lage positionierbare, vorzugweise rollenförmige Abstützungen ausweist und mindestens eine Abstützung, eine Einrichtung zur Feststellung der Auflagekraft und/oder eine Einrichtung zur Feststellung der vertikalen Lage des Abstützungspunktes besitzt, wobei die Einrichtungen gegebenenfalls durch Leitungen mit einer programmierbaren Recheneinheit und diese durch mindestens einen Anschluß mit einem Datenausgabemittel verbunden ist (sind). Die Verbindungen zwischen den Einrichtungen zur Feststellung der Auflagekraft und/oder der vertikalen Lage des Abstützpunktes und der Recheneinheit sowie dem Datenausgabemittel müssen eine Übertragung der Meßwerte oder Daten sicherstellen, können jedoch in beliebiger Form als Stromleiter wie Drähte, Lichtleiter, wie Glasfasereinrichtungen, drahtlose Übertragungsmittel wie Funkeinrichtungen und dergleichen ausgeführt sein.

Die mit der Erfindung erzielten Vorteile sind im wesentlichen darin zu sehen, daß durch eine einfache Gewichtserfassung die tatsächliche Krümmung von Langgut feststellbar ist. Für einen kreisförmig gekrümmmten Träger müssen zum Beispiel lediglich in zwei Teilbereichen desselben die Lage am Auflager und die auf dieses ausgeübte Kraft gemessen werden, um mittels einer programmierbaren Recheneinheit den Krümmungsradius in schwerelosem Zustand feststellen zu können. Dabei ist eine genaue Erfassung der Lage eines Endenbereiches am Auflager wichtig, weil die Auflagerkraft vom Ausmaß des Überhanges vom Langgut abhängt.

Sowohl hinsichtlich einer weiter verbesserten Genauigkeit der Bestimmung einer Krümmung, insbesondere einer unregelmäßigen krümmung, als auch für einen integrierten Einsatz eines einfachen und höchst wirtschaftlich durchführbaren Meßverfahrens im Erzeugungsablauf ist es besonders vorteilhaft, wenn das Langgut zumindest teilweise, vorzugsweise in vollem Ausmaß seiner Längserstreckung über eine Gewichts und/oder Auflageniveau-Ermittlungseinrichtung verbracht und vermessen wird.

Gemäß einer weiteren Variante der Erfindung kann vorgesehen sein, daß bei im wesentlichen ruhenden Langgut von zumindest einem Teil der horizontal ausgerichteten, wirksamen Abstützungen jeweils die Auflagekraft und/oder bei vertikal positionierbaren Abstützungen die vertikale Lage der Abstützungspunkte, vorzugsweise bei gesteuerter Abstützkraft gemessen wird. Dadurch ist es möglich, die, durch ein Rollen des Langgutes über das messende Auflager gebildeten Laststöße zu eliminieren und die Genauigkeit der Kraft- oder Lageermittlung weiter zu steigem.

Für eine Bestimmung einer zweidimensionalen Krümmung im Zustand der Schwerelosigkeit des Walzgutes hat es sich als vorteilhaft durchführbar erwiesen, wenn nach einer ersten Bestimmung der horizontalen Krümmung des Langgutes dieses um einen Winkel von weniger oder mehr als 180 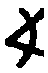 °auf der Unterlage gedreht, eine neuerliche Krümmungsmessung durchgeführt und Güte der Axfluchtung bzw. eine Abweichung von der Geraden unter Berücksichtigung des Drehwinkels errechnet wird.

Eine Ermittlung der zweidimensionalen Krümmung von stabförmigen Gegenständen kann vereinfacht werden bzw. in einem Durchgang erfolgen, wenn zusätzlich zu den horizontalen Abstützungen und Messung der vertikalen Auflagekräfte eine vertikale Linearausrichtung des Langgutes mit einer Messung der horizontalen Richtkräfte durchgeführt wird.

Eine Vorrichtung zur Messung der Axabweichung in Längsrichtung von Langgut kann besonders vorteilhaft im Fertigungsablauf integrierbar sein und genaue Meßergebnisse erbringen, wenn das Abstützmittel als Rollgangteil für das in Längsrichtung bewegte Langgut ausgebildet ist und mindestens eine Rolle bzw. Abstützung, eine Einrichtung, zum Beispiel eine von einer Auflage getragene Kraftmeßdose, zur Feststellung der Auflagekraft besitzt und gegebenenfalls mindestes eine Rolle zur Messung der Position des Langgutes am Abstützmittel und/oder der Längserstreckung des Langgutes aufweist.

Die Meßgenauigkeit kann dabei gefördert werden, wenn das Abstützmittel eine Meßeinrichtung zur Feststellung der jeweiligen Lage und gegebenenfalls der Längserstreckung des Langgutes, zum Beispiel ein Strahlenmeßgerät, und/oder einen gegebenenfalls verschiebbaren und/oder in eine funktionslose Lage ausschwenkbaren Anschlag aufweist.

Es ist auch erfindungsgemäß möglich, daß ein Rollengang ein vertikal verschiebbares Abstützmittel für das Langgut mit über die Rollenauflageebene anhebbaren Stützungen aufweist, welche horizontal ausrichtbare Stützungen mittels Ûbertragungsteilen mit der Einrichtung zur Feststellung der Auflagekraft in Wirkverbindung stehen und die Einrichtung ihrerseits von Auflagen getragen ist.

Eine weitere Variante der Erfindung kann eine Ausführungsform darstellen, bei welcher das Abstützmittel als Rollgangteil mit vertikal positionierbaren Abstützungen ausgebildet ist, welche Abstützungen zur Einstellung bzw. Gleichstellung der Auflagekraft steuerbar oder kommunizierend, zum Beispiel mittels Hydraulikleitung verbunden sind und die Einrichtungen zur Feststellung der jeweils vertikalen Lage oder Abstützung über Leitungen mit der Recheneinheit in Verbindung stehen. Dadurch kann auch optisch, also für einen Betrachter augenfällig, eine Stabkrümmung vermittelt werden.

Im folgenden wird die Erfindung anhand von lediglich einen Ausführungsweg darstellenden Zeichnungen näher erläutert. Es zeigt:
- Fig. 1: Meßeinrichtung für bewegtes Langgut
- Fig. 2: Meßeinrichtung für ruhendes Langgut am Rollgang
- Fig. 3: Meßeinrichtung für ruhendes Langgut mit anhebbaren Abstützungen
- Fig. 4: Meßanordnung mit positionierbaren Abstützungen, Gleichstellung der Auflagekraft
- Fig. 5: Kraft-Weg-Verlauf für ein ideal gerades Langgut
- Fig. 6: Kraft-Weg-Verlauf für ein kreisförmig gekrümmtes Langgut
- Fig. 7: Kraft-Weg-Verlauf für ein sinusförmig gekrümmtes Langgut

### Bezugszeichenliste geltend für die Darstellungen

- 1: Langgut
- 11: Bewegungsrichtung des Langgutes
- 20: Abstützmittel
- 2: Meßrollen
- 2': Abstützrollen
- 21: Anschlag
- 3: Einrichtung zur Feststellung der Auflagekraft
- 3': Einrichtung zur Feststellung der vertikalen Lage des Abstützpunktes
- 31: Auflagekraft
- 32: Auflage
- 33: Bewegungsrichtung der Auflage
- 34: Stützmittel
- 35: Übertragungsteile
- 4: Leitungen zur Meßwertübertragung
- 5: Recheneinheit
- 6: Anschluß an ein Datenausgabemittel
- 7: hydraulischer Druckgeber
- 8: Hydraulikleitungen
- 9: Hydraulikzylinder

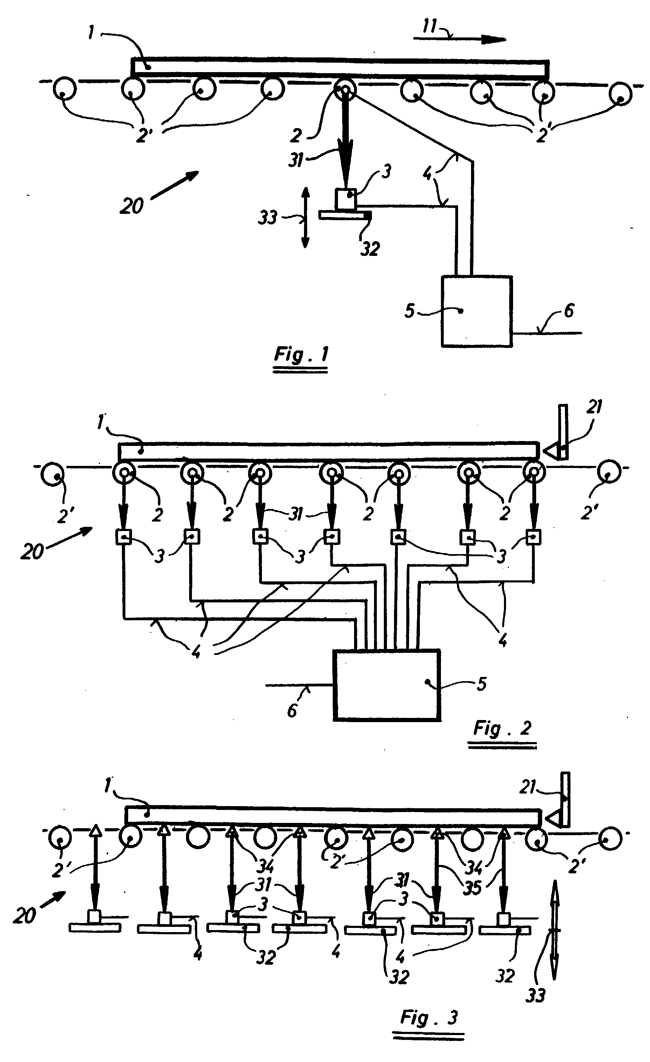

In Fig. 1 ist schematisch ein Abstützmittel 20 in einem Rollgang bestehend aus Stützrollen 2' und einer Meßrolle 2 dargestellt. Wird ein Langgut 1 über das Abstützmittel 20 in Richtung 11 bewegt so wird bei Erreichen der Meßrolle 2 vom Endbereich des Gutes 1 eine Auflagekraft 31 auf eine Einrichtung 3 zur Kraftmessung, welche von einer Auflage 32 abgestützt ist, ausgeübt.
Durch die Einrichtung 3 erfolgt eine Generierung eines die Größe der Auflagekraft 31 kennzeichnenden Signals, welches über Leitungen 4, gegebenenfalls auch drahtlos, einer programmierbaren Recheneinheit zugeführt wird. Bei einem Weiterführen des Langgutes 1 über die Meßrolle 2 wird bis zum Erreichen einer folgenden Abstützrolle 2' ein Überhang gebildet, der die Auflagekraft 31 vergrößert (siehe auch Fig. 5). Erreicht nun das Ende des Langgutes 1 die der Meßrolle 2 folgenden Abstützrolle 2', so wird dieses abgestützt , wodurch die Auflagekraft 31 sprunghaft verkleinert wird. Im exponentiell verringertem Maße wird ein ähnlicher Kraftverlauf auch beim Auflaufen des Lang- bzw. Walzgutes 1 auf die folgenden Abstützrollen 2' ermittelt. Die Unstetigkeitsstellen im Verlauf der Auflagekraft 31 über der Zeit können als Wegindikator bzw. als Indikator für die Lage des Endenbereiches am Auflager herangezogen werden.
In Fig. 2 ist schematisch ein Abstützmittel 20 eines Rollganges dargestellt, welches zur Ermittlung einer Krümmung eines unbewegten Langgutes 1 dient. Dabei erfolgt ein Heranführen bzw. ein Positionieren desselben an einem Anschlag 21, wodurch eine Lagefeststellung erfolgen kann. Über mehrere Meßrollen 2 wird sodann eine Feststellung der jeweiligen Auflagekräfte 31 mittels entsprechender Einrichtungen 3 vorgenommen, deren Signale, zum Beispiel durch Leitungen 4, einer Recheneinheit 5 zugeführt und in dieser ausgeweitet werden.

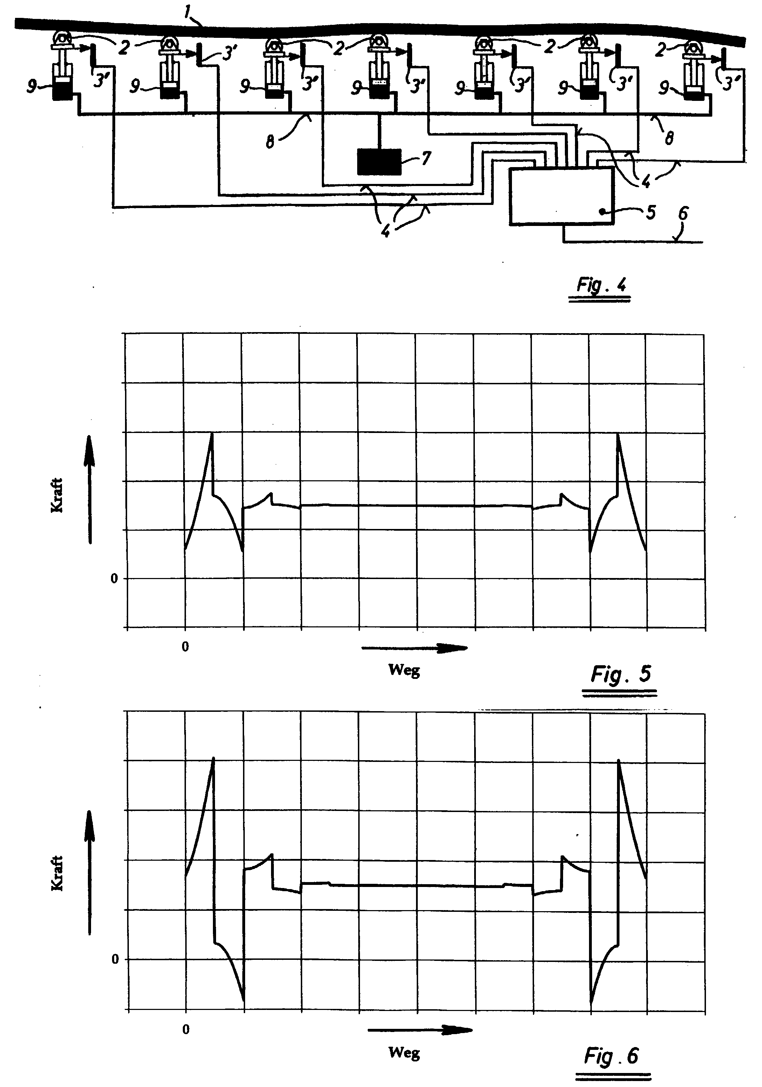

Fig. 3 zeigt einen Rollgang und ein Abstützmittel 20 mit Abstützrollen 2', in welchem ein Langgut 1 an einem Anschlag 21 positionierbar ist, in prinzipieller Darstellung. Nach einem Einrichten am Anschlag 21 und damit einer genauen Erfassung der Lage des Langgutes 1 erfolgt dessen Anhebung in Pfeilrichtung 33 über ein Niveau der Abstütztollen 2' durch Stützmittel 34, welche jeweils ein Übertragungsteil 35 zum Einleiten von Auflagekraft 31 in eine Einrichtung 3 zur Kraftmessung aufweist. Die Einrichtungen 3 zur Messung der jeweiligen Auflagekraft 31 sind wiederum zur Weiterleitung der Signale über Leitungen 4 mit einer Recheneinheit 5 verbunden. In Fig. 4 ist schematisch eine Meßanordnung mit einer Gleichstellung der Auflagekräfte am Abstützmittel 20 dargestellt. Dabei sind über eine Längserstreckung eines Langgutes 1 Abstützrollen 2 angeordnet, welche jeweils über einen Hydraulikzylinder 9 abgestützt sind. Zu einer Gleichregelung der Auflagekräfte sind die Hydraulikzylinder untereinander durch eine Hydraulikleitung 8 verbunden, wobei ein hydraulischer Druckgeber 7 zur Niveauregelung einsetzbar ist. Eine jeweilige Höhe der Meßrollen wird mittels einer Einrichtung 3' zur Feststellung der vertikalen Lage des Abstützpunkts erfaßt, welche Einrichtung 3' diesbezügliche Signale über eine Übertragungsleitung 4 einer Recheneinheit 5 zuführt. Eine Visualisierung der ermittelten Ergebnisse der Krümmung des Langgutes erfolgt durch Datenausgabemittel, welche durch einen Anschluß 6 mit der Recheneinheit in Verbindung stehen.
Fig. 5, Fig. 6 und Fig. 7 zeigen Meßergebnisse des Kraft-Weg-Verlaufes von bewegtem Langgut, welcher in einer Einrichtung gemäß Fig. 1 ermittelt wurde.
In Fig. 5 ist die Auflagekraft in Abhängigkeit des Weges eines idealgeraden Langgutes über einer Meßrolle dargestellt. Beim Auflaufen des Langgutendes auf die Meßrolle wird eine unterdurchschnittliche Auflagekraft auf diese ausgeübt, welche Kraft sich mit steigendem Überhang des Endes vergrößert. Beim Auflaufen auf die nachfolgende Stützrolle vermindert sich schlagartig die gemessene Auflagekraft am Meßpunkt, welche sich infolge der Ausbildung eines Überhanges an der Stützrolle durch die Wirkung des Biegemomentes weiter verringert. Ein Auflaufen des Langgutes auf die nächstfolgenden Stützrollen bewirkt wiederum eine schlagartige Änderung der Auflagekraft, jedoch in geringerem Maße, bis letztendlich der Bereich der Durchschnittslast erreicht wird. Eine gleichartige, sich jedoch zum Ende hin vergrößernde Auflagekraftänderung ist beim Abzug des Langgutes von der Meßvorrichtung feststellbar.
Zeigt nun, wie in Fig. 6 dargestellt, der Kraft-Weg Verlauf der Messung eine erhöhte, insbesondere überdurchschnittliche oder eine verminderte Auflagekraft beim Auf- und Ablauf des Langgutes auf die bzw. von der Meßrolle, und sind die schlagartigen Änderungen der Kräfte beim Auf- bzw. Ablaufen auf die bzw. von den nächstgelegenen Abstützrollen groß oder gering, wobei jedoch der zwischenliegende Wert weitgehend gleich ist, so weist das Langgut eine nach oben oder nach unten gerichtete bzw. positive oder negative Krümmung auf, deren Ausmaß durch die Recheneinheit ermittelbar ist.

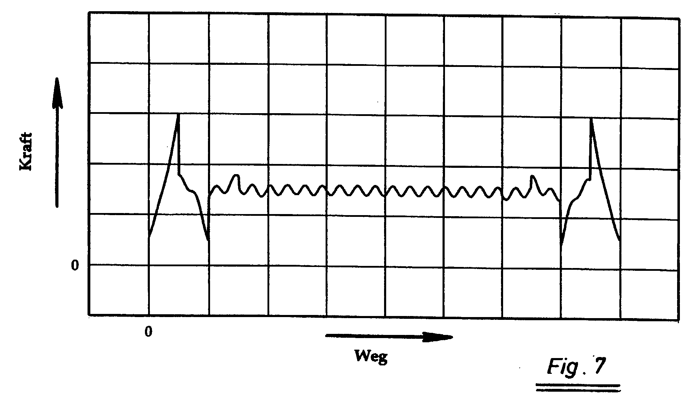

Fig. 7 zeigt den durch eine Meßeinrichtung ermittelten Kraft-Weg Verlauf eines lediglich sinusförmig gekrümmten Langgutes.

## Patentansprüche

1. Verfahren zur Bestimmung einer Krümmung von Langgut, insbesondere von gewalzten Trägern, Schienen und dergleichen, bzw. von dessen Abweichung von einer horizontalen Ebene in Längserstreckung ohne äußere Krafteinwirkung wie Biege- und Richtwirkung der Auflagekräfte, **dadurch gekennzeichnet**, daß von mindestens zwei Teilbereichen des Langgutes bzw. von Segmenten in dessen Längserstreckung deren Lage sowie die auf zumindest eine der horizontal ausgerichteten Abstützungen wirkende Auflagekraft und/oder bei vertikal positionierbaren Abstützungen die vertikale Lage von zumindest einem der Abstützungspunkte gemessen und die Meßwerte einer programmierbaren Recheneinheit zugeführt werden, mittels welcher Einheit in Abhängigkeit von der Lage des Langgutes auf dem Abstützungsmittel und der jeweiligen Auflagekräfte und/oder Auflageniveaus der Abstützungen die Abweichung von der Horizontalen im Zustand einer Schwerelosigkeit berechnet wird.

2. Verfahren nach Anspruch 1, **dadurch gekennzeichnet**, daß das Langgut, zumindest teilweise, vorzugsweise im vollen Ausmaß seiner Längserstreckung über mindestens eine Gewichts-und/oder Auflageniveau-Ermittlungwinrichtung verbracht und vermessen wird.

3. Verfahren nach Anspruch 1, **dadurch gekennzeichnet**, daß bei im wesentlichen ruhenden Langgut von zumindest einem Teil der horizontal ausgerichteten , wirksamen Abstützungen jeweils die Auflagekraft und/oder bei vertikal positionierbaren Abstützungen die vertikale Lage der Abstützungspunkte, vorzugsweise bei gesteuerter Abstützkraft gemessen wird.

4. Verfahren nach einem der Ansprüche 1 bis 3, **dadurch gekennzeichnet**, daß nach einer ersten Bestimmung der horizontalen Krümmung des Langgutes dieses um einen Winkel von weniger oder mehr als 180 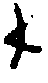 ° auf der Unterlage gedreht, eine neuerliche Krümmungsmessung durchgeführt und Güte der Axfluchtung bzw. eine Abweichung von der Geraden unter Berücksichtigung des Drehwinkels errechnet wird.

5. Verfahren nach einem der Ansprüche 1 bis 4, **dadurch gekennzeichnet,** daß zusätzlich zu den horizontalen Abstützungen und Messung der vertikalen Auflagekräfte eine vertikale Linearausrichtung des Langgutes mit einer Messung der horizontalen Richtkräfte durchgeführt wird.

6. Vorrichtung zur Bestimmung einer Krümmung von Langgut, insbesondere von gewalzten Trägern, Schienen und dergleichen, bzw. dessen Abweichung von einer horizontalen Ebene in Längsrichtung ohne äußere Krafteinwirkung wie Biege- und Richtwirkung der Auflagekräfte, **dadurch gekennzeichnet**, daß ein Abstützungsmittel (20) für das Langgut (1) mindestens drei horizontal ausrichtbare und/oder in ihrer vertikalen Lage positionierbare rollenförmige Abstützungen (2') aufweist und mindestens eine Abstützung (2), eine Einrichtung (3) zur Feststellung der Auflagekraft (31) und/oder eine Einrichtung ( 3') zur Feststellung der vertikalen Lage des Abstützungspunktes besitzt, wobei die Einrichtung(en) (3,3'), gegebenenfalls durch Leitungen (4), mit einer programmierbaren Recheneinheit (5) und diese durch mindestens einen Anschluß (6) mit einem Datenausgabemittel verbunden ist (sind).

7. Vorrichtung nach Anspruch 6, **dadurch gekennzeichnet**, daß das Abstützmittel (20) als Rollgangteil für das in Längssrichtung bewegte Langgut ausgebildet ist und mindestens eine Rolle bzw. Abstützung (2) , eine Einrichtung (3), zum Beispiel eine von einer Auflage (32) getragene Kraftmeßdose (3), zur Feststellung der Auflagekraft (31) besitzt und gegebenenfalls mindestens eine Rolle (2) zur Messung der Position des Langgutes (1) am Abstützmittel (20) und/oder der Längserstreckung des Langgutes (1) aufweist.

8. Vorrichtung nach Anspruch 6 oder 7, **dadurch gekennzeichnet,** daß das Abstützmittel (20) eine Meßeinrichtung zur Feststellung der jeweiligen Lage und gegebenenfalls der Längserstreckung des Langgutes (1), zum Beispiel ein Strahlenmeßgerät, und/oder einen gegebenenfalls verschiebbaren und/oder in eine funktionslose Lage ausschwenkbaren Anschlag (21) aufweist.

9. Vorrichtung nach einem der Ansprüche 6 bis 8, **dadurch gekennzichnet,** daß ein Rollengang ( 2, 2') ein vertikal verschiebbares Abstützmittel (20) für das Langgut (1) mit über die Rollenauflageebene anhebbaren Stützungen (34) aufweist, welche horizontal ausrichtbare Stützungen (34) mittels Übertragungsteil (35) mit der Einrichtung (3) zur Feststellung der Auflagekraft (31) in Wirkverbindung stehen und die Einrichtung (3) ihrerseits von Auflagen (32) getragen ist.

10. Vorrichtung nach einem der Ansprüche 6 bis 9, **dadurch gekennzeichnet**, daß das Abstützmittel (20) als Rollgangteil mit vertikal positionierbaren Abstützungen (2) ausgebildet ist, welche Abstützungen (2) zur Einstellung bzw. Gleichstellung der Auflagekraft steuerbar oder kommunizierend, zum Beispiel mittels Hydraulikleitung (8) verbunden sind und die Einrichtungen (3') zur Feststellung der jeweils vertikalen Lage oder Abstützung (2), gegebenenfalls über Leitungen (4), mit der Recheneinheit (5) in Verbindung stehen.
